# EUROPEAN PATENT SPECIFICATION

(11) **EP 4 365 866 B1**
(45) Date of publication and mention of the grant of the patent: **01.04.2026**
(21) Application number: 22832429.9
(22) Date of filing: 22.02.2022
(51) Int. Cl.: G08G 1/00, G08G 1/09, G08G 1/01, G08G 1/0967, G08G 1/16, H04Q 9/00

(54) **INFORMATION OUTPUT METHOD, INFORMATION OUTPUT DEVICE, AND PROGRAM**
INFORMATIONSAUSGABEVERFAHREN, INFORMATIONSAUSGABEVORRICHTUNG UND PROGRAMM
PROCÉDÉ DE SORTIE D'INFORMATIONS, DISPOSITIF DE SORTIE D'INFORMATIONS ET PROGRAMME

(30) Priority: 28.06.2021 US 202163215654 P
(43) Date of publication of application: 08.05.2024
(73) Proprietor: Panasonic Intellectual Property Management Co., Ltd., Kadoma-shi, Osaka 571-0057 (JP)
(72) Inventor: TOJIMA, Masayoshi, Kadoma-shi, Osaka 571-0057 (JP); MURAMOTO, Eiichi, Kadoma-shi, Osaka 571-0057 (JP); KUHARA, Shunsuke, Kadoma-shi, Osaka 571-0057 (JP)
(74) Representative: Novagraaf International SA
(86) International application number: PCT/JP2022/007097
(87) International publication number: WO 2023/276262

(56) References cited:
- JP-A- 2016 095 659
- JP-A- 2017 147 626
- JP-A- 2018 142 265
- JP-A- 2019 160 146
- JP-A- 2019 160 146
- JP-A- 2020 005 123
- JP-A- 2020 166 665
- JP-A- 2021 033 612
- JP-A- 2021 036 796
- JP-A- 2021 056 085
- US-A1- 2015 248 131
- US-A1- 2019 163 176
- US-A1- 2020 218 253
- US-A1- 2020 310 417

## Description

### [Technical Field]

The present disclosure relates to an information output method, an information output device, and a program.

### [Background Art]

There are known information output methods and so forth for outputting control information for controlling mobile objects. Patent Literature (PTL) 1 discloses an example method of such information output methods and so forth that includes generating of command data for an autonomous vehicle and transmitting of the command data to the autonomous vehicle.

### [Citation List]

### [Patent Literature]

[PTL 1] Japanese Unexamined Patent Application Publication (Translation of PCT Application) No. 2019-505059
Patent document JP 2019 160146 A discloses a method for vehicles, particularly autonomous vehicles, that enables operators at remote locations to provide assistance when needed, predicting when remote support will be needed by analysing planned vehicle routes and scheduled arrival times at predetermined "support points" where remote assistance is likely required.

### [Summary of Invention]

### [Technical Problem]

However, the method of PTL 1 fails to perform remote operation or remote monitoring of one of two or more autonomous vehicles, when such two or more autonomous vehicles are located, at the same timing, in one or more remoting-required locations where at least one of remote operation or remote monitoring is required. This results in traffic obstruction.

In view of this, the present disclosure provides an information output method and so forth that are capable of preventing and reducing traffic obstruction.

### [Solution to Problem]

An aspect of the present invention includes a computer-implemented information output method in accordance with appended claim 1.

Another aspect of the present invention includes an information output device in accordance with appended claim 6.

The program according to an aspect of the present disclosure is a program for causing a computer to execute the foregoing computer-implemented information output method according to claim 7.

Note that these general or specific aspects may be implemented in the form of a system, a method, an integrated circuit, a computer program, or a recording medium such as a computer-readable CD-ROM. These general and specific aspects may also be implemented using any combination of systems, methods, integrated circuits, computer programs, or recording media. The recording medium may be a non-transitory recording medium.

### [Advantageous Effects of Invention]

The computer-implemented information output method and so forth of the present disclosure are capable of preventing and reducing traffic obstruction.

Further merits and advantageous effects in one aspect of the present invention will become apparent from the following description and drawings. These merits and/or advantageous effects are provided by the characteristics described in the following description and drawings. However, not all of these merits and/or advantageous effects do not necessarily have to be provided to achieve one or more of the same characteristics.

### [Brief Description of Drawings]

[FIG. 1]

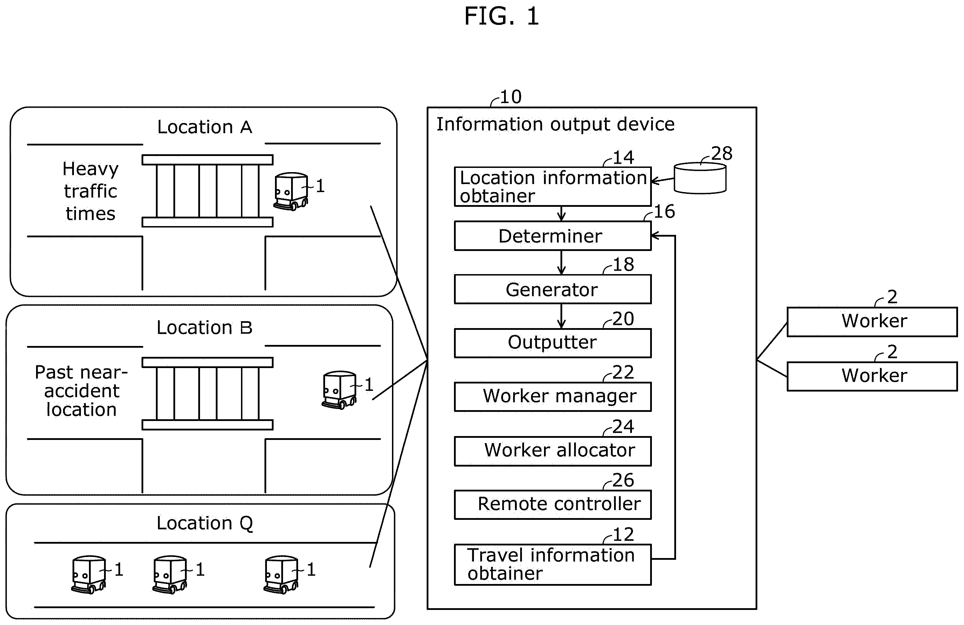

   FIG. 1 is a block diagram of the functional configuration of a computer-implemented information output device according to an embodiment.
[FIG. 2]

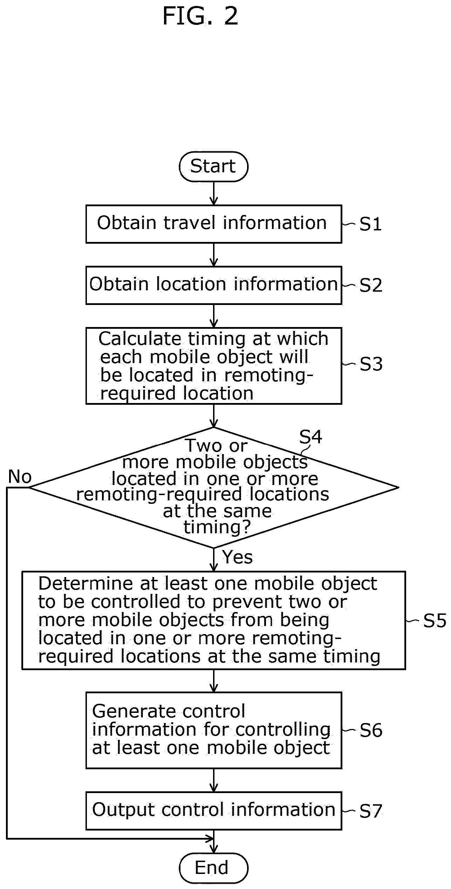

   FIG. 2 is a flowchart showing an example of a computer-implemented information output method performed by the information output device shown in FIG. 1.
[FIG. 3]

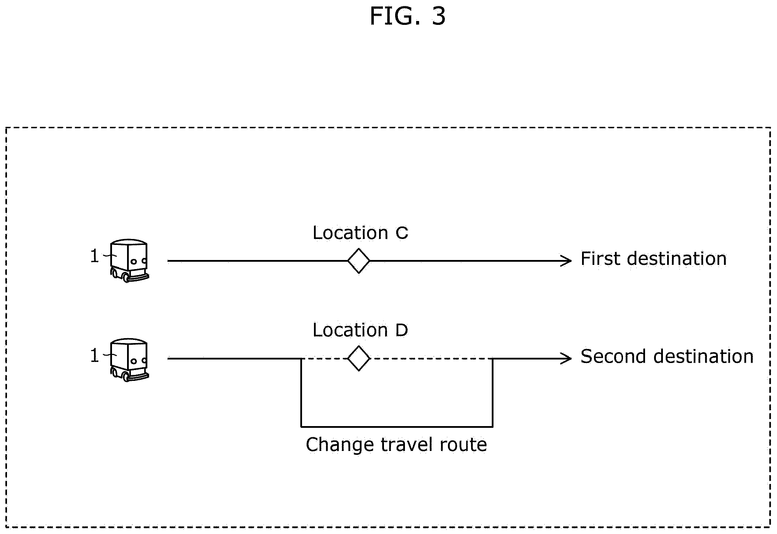

   FIG. 3 is a first diagram for explaining the example of the computer-implemented information output method shown in FIG. 2.
[FIG. 4]

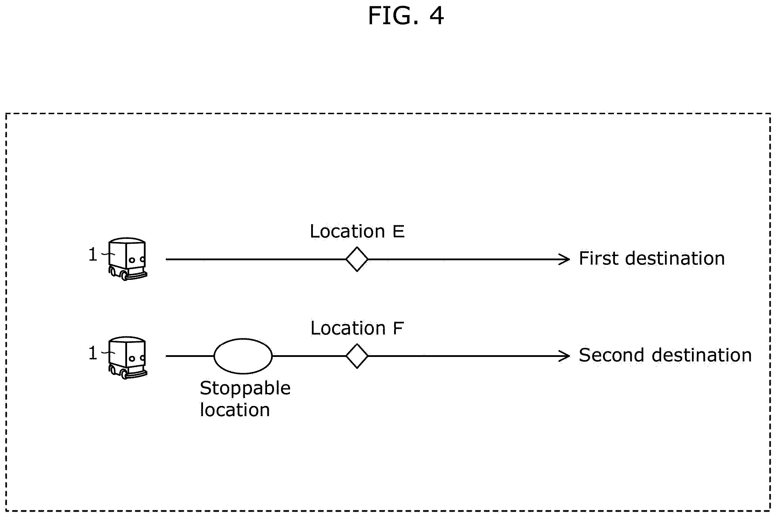

   FIG. 4 is a second diagram for explaining the example of the computer-implemented information output method shown in FIG. 2.
[FIG. 5]

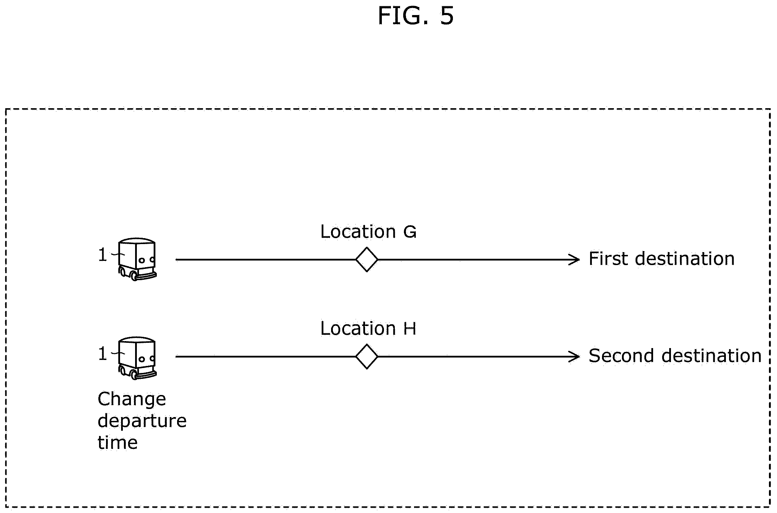

   FIG. 5 is a third diagram for explaining the example of the computer-implemented information output method shown in FIG. 2.
[FIG. 6]

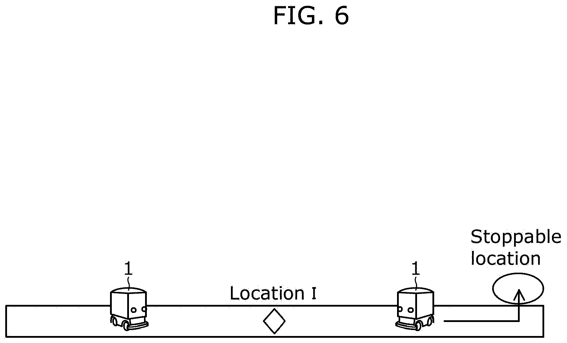

   FIG. 6 is a fourth diagram for explaining the example of the computer-implemented information output method shown in FIG. 2.
[FIG. 7]

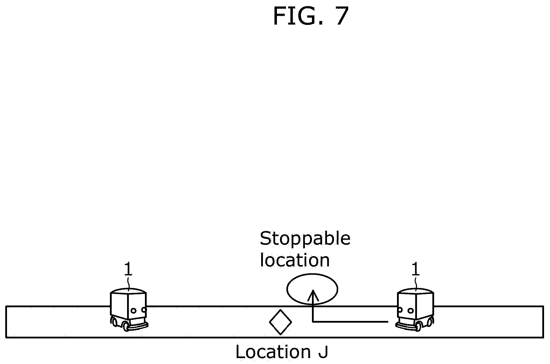

   FIG. 7 is a fifth diagram for explaining the example of the computer-implemented information output method shown in FIG. 2.
[FIG. 8]

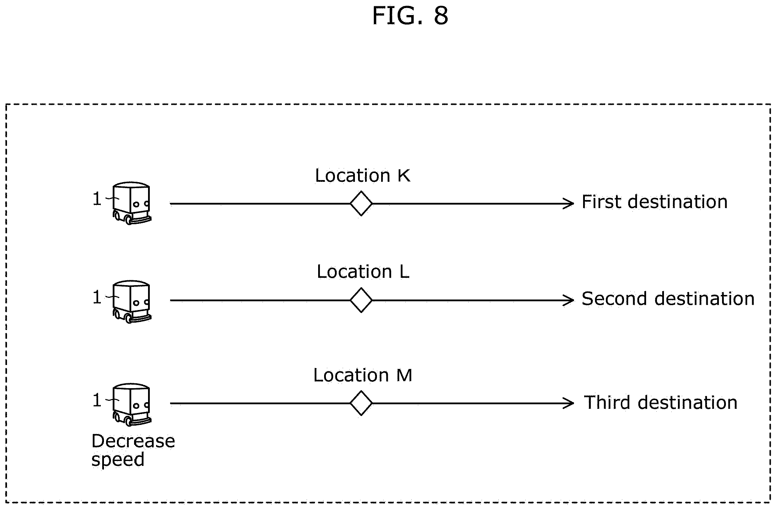

   FIG. 8 is a sixth diagram for explaining the example of the computer-implemented information output method shown in FIG. 2.
[FIG. 9]

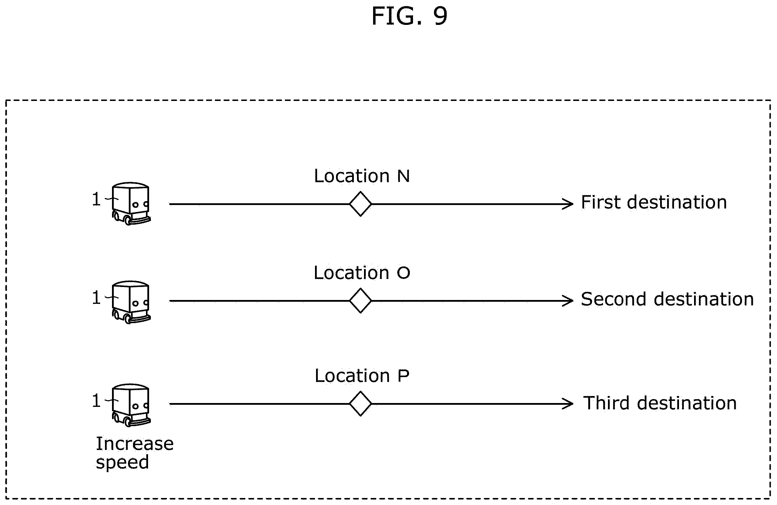

   FIG. 9 is a seventh diagram for explaining the example of the computer-implemented information output method shown in FIG. 2.
[FIG. 10]

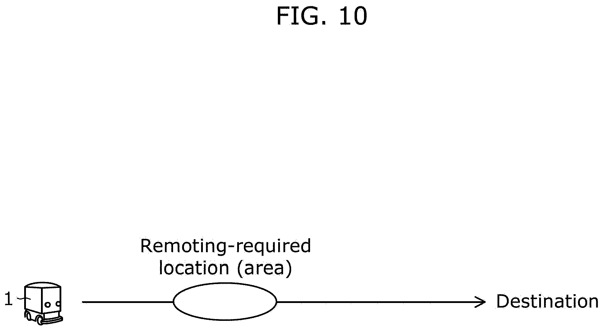

   FIG. 10 is an eighth diagram for explaining the example of the computer-implemented information output method shown in FIG. 2.
[FIG. 11]

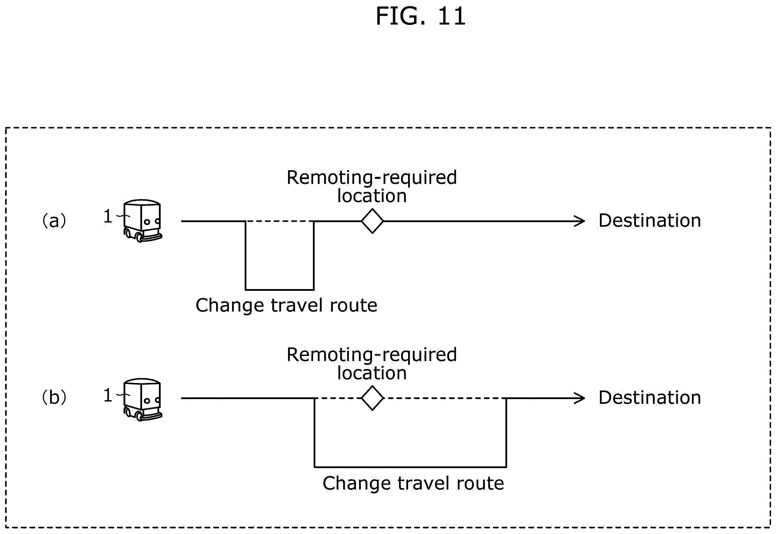

   FIG. 11 is a ninth diagram for explaining the example of the computer-implemented information output method shown in FIG. 2.
[FIG. 12]

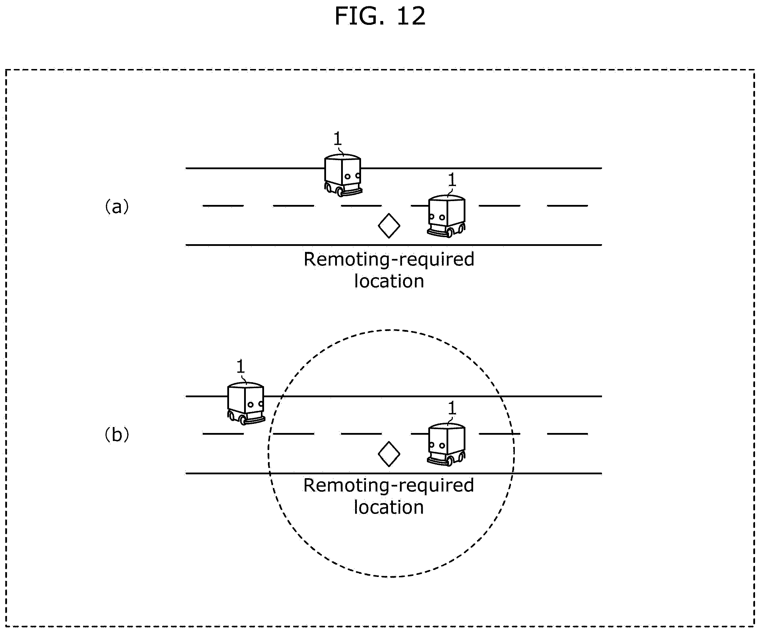

   FIG. 12 is a tenth diagram for explaining the example of the computer-implemented information output method shown in FIG. 2.

### [Description of Embodiment]

To solve the problem described above, the computer-implemented information output method according to an aspect of the present invention includes: obtaining travel information relating to travel of a mobile object which is capable of autonomously traveling and being subjected to at least one of remote operation or remote monitoring; obtaining location information relating to a remoting-required location where at least one of the remote operation or the remote monitoring is required; determining whether two or more mobile objects will be located in one or more remoting-required locations at a same timing, based on the travel information and the location information, the two or more mobile objects each being the mobile object, the one or more remoting-required locations each being the remoting-required location; generating control information for controlling at least one mobile object, among the two or more mobile objects, to prevent the two or more mobile objects from being located in the one or more remoting-required locations at the same timing, when the two or more mobile objects are determined to be located in the one or more remoting-required locations at the same timing; and outputting the control information.

With this, control information is generated and outputted for controlling at least one mobile object, among two or more mobile objects, to prevent such two or more mobile objects from being located in one or more remoting-required locations at the same timing. This prevents two or more mobile objects from being located in one or more remoting-required locations at the same timing. It is thus possible to prevent, for example, any one of the two or more mobile objects from failing to travel in a remoting-required location because of the unavailability of remote operation or remote monitoring. This consequently prevents and reduces traffic obstruction.

Also, in the computer-implemented information output method according to an aspect of the present invention, the two or more mobile objects comprise more than a predetermined number of mobile objects.

With this, it is possible to prevent two or more mobile objects from being located in one or more remoting-required locations at the same timing, when the number of the two or more mobile objects is greater than the predetermined number. Consequently, it is possible to more effectively prevent and reduce traffic obstruction.

Also, in the computer-implemented information output method according to an aspect of the present invention, the predetermined number is a total number of workers who perform at least one of the remote operation or the remote monitoring.

With this, it is possible to prevent two or more mobile objects from being located in one or more remoting-required locations at the same timing, when the number of the two or more mobile objects is greater than the number of workers who perform at least one of remote operation or remote monitoring. Consequently, it is possible to more effectively prevent and reduce traffic obstruction.

Also, in the computer-implemented information output method according to an aspect of the present invention, the travel information may include information indicating a travel route of the mobile object, information indicating a position of the mobile object, and information indicating a travel speed of the mobile object.

With this, it is easy to calculate the timing at which a mobile object will be located in a remoting-required location. This facilitates the determination of whether two or more mobile objects will be located in one or more remoting-required locations at the same timing. Consequently, it is easy to prevent and reduce traffic obstruction.

Also, in the computer-implemented information output method according to an aspect of the present invention, , the location information may include at least one of information indicating a position of the remoting-required location, information indicating time at which the remoting-required location is present, or information indicating a condition for being the remoting-required location.

With this, it is easy to calculate the timing at which a mobile object will be located in a remoting-required location. This facilitates the determination of whether two or more mobile objects will be located in one or more remoting-required locations at the same timing. Consequently, it is easy to prevent and reduce traffic obstruction.

Also, in the computer-implemented information output method according to an aspect of the present invention may include: estimating a timing at which the mobile object will be located in the remoting-required location, based on a distance from the mobile object to the remoting-required location and a travel speed of the mobile object, and determining whether the two or more mobile objects will be located in the one or more remoting-required locations at the same timing, based on the timing estimated.

With this, it is possible to more accurately determine whether two or more mobile objects will be located in one or more remoting-required locations at the same timing. Consequently, it is possible to prevent and reduce traffic obstruction in a more reliable manner.

Also, the computer-implemented information output method according to an aspect of the present invention may include: including, as the at least one mobile object, at least one of the mobile object whose travel speed is changeable, the mobile object whose travel route is changeable, the mobile object that is stoppable, the mobile object whose departure time is changeable, or the mobile object that is able to move backward.

With this, it is possible to prevent two or more mobile objects from being located in one or more remoting-required locations at the same timing by controlling a mobile object that is less likely to obstruct traffic. Consequently, it is possible to further prevent and reduce traffic obstruction.

Also, in the computer-implemented information output method according to an aspect of the present invention includes: incorporating, into the control information, at least one of information for changing a travel speed of the mobile object, information for changing a travel route of the mobile object, information for stopping the mobile object, information for changing a departure time of the mobile object, or information for causing the mobile object to move backward.

With this, it is easy to prevent two or more mobile objects from being located in one or more remoting-required locations at the same timing. Consequently, it is easy to prevent and reduce traffic obstruction.

Also, to solve the problem described above, the computer-implemented information output device according to an aspect of the present invention includes: a travel information obtainer that obtains travel information relating to travel of a mobile object which is capable of autonomously traveling and being subjected to at least one of remote operation or remote monitoring; a location information obtainer that obtains location information relating to a remoting-required location where at least one of the remote operation or the remote monitoring is required; a determiner that determines whether two or more mobile objects will be located in one or more remoting-required locations at a same timing, based on the travel information and the location information, the two or more mobile objects each being the mobile object, the one or more remoting-required locations each being the remoting-required location; a generator that generates control information for controlling at least one mobile object, among the two or more mobile objects, to prevent the two or more mobile objects from being located in the one or more remoting-required locations at the same timing, when the two or more mobile objects are determined to be located in the one or more remoting-required locations at the same timing; and an outputter that outputs the control information.

With this, it is possible to achieve the same operational effects as those achieved by the foregoing information output method.

Also, to solve the problem described above, the program according to an aspect of the present invention is a program for causing a computer to execute the foregoing information output method.

With this, it is possible to achieve the same operational effects as those achieved by the foregoing information output method.

Hereinafter, a certain exemplary embodiment is described in greater detail with reference to the accompanying Drawings.

The exemplary embodiment described below shows a general or specific example. The numerical values, shapes, materials, elements, the arrangement and connection of the elements, steps, the processing order of the steps, etc. shown in the following exemplary embodiment are mere examples, and therefore do not limit the scope of the present disclosure. Also, among the elements in the following exemplary embodiment, those not recited in any one of the independent claims are described as optional elements.

Also note that the drawings are schematic diagrams, and thus they are not always exactly illustrated. Also, the same elements are assigned the same reference marks throughout the drawings

### [Embodiment]

FIG. 1 is a block diagram of the functional configuration of computer-implemented information output device 10 according to an embodiment. With reference to FIG. 1, the following describes the functional configuration of information output device 10.

As shown in FIG. 1, computer-implemented information output device 10 is a device that outputs information for controlling each of a plurality of mobile objects 1. Each of the plurality of mobile objects 1 is capable of autonomously traveling and being subjected to at least one of remote operation or remote monitoring. Stated differently, each of the plurality of mobile objects 1 is capable of being at least one of remotely operated or remotely monitored. For example, each of the plurality of mobile objects 1 autonomously travels toward the destination. Each of the plurality of mobile objects 1 is, for example, a vehicle, a robot, etc. Note that in the following description, mobile objects 1 included in the plurality of mobile objects 1 are sometimes described as first to third mobile objects 1. Also note that the number of the plurality of mobile objects 1 is not limited to a specific number.

Computer-implemented information output device 10 controls two or more of the plurality of mobile objects 1 to prevent two or more mobile objects 1 from being located, at the same timing, in one or more remoting-required locations, each being a location where at least one of remote operation or remote monitoring is required.

For example, location A dynamically becomes a remoting-required location. For example, location A becomes a remoting-required location during a time period in which a traffic volume in location A is heavier than a predetermined volume. Also, for example, location B is statistically a remoting-required location. Location B is, for example, a location where a near-miss accident occurred in the past. Also, for example, location Q cannot be a remoting-required location.

When each of the plurality of mobile objects 1 is traveling in location A, for example, at least one of remote operation or remote monitoring of such mobile object 1 is required. The same is applicable to the case where each of the plurality of mobile objects 1 is traveling in location B. When each of the plurality of mobile objects 1 is traveling in location Q, for example, remote operation and remote monitoring of such mobile object 1 are not required.

When the timing at which first mobile object 1 will be located in location A, the timing at which second mobile object 1 will be located in location B, and the timing at which third mobile object 1 will be located in location B are the same, for example, information output device 10 generates control information for causing the timing at which first mobile object 1 will be located in location A, the timing at which second mobile object 1 will be located in location B, and the timing at which third mobile object 1 will be located in location B to be different, and outputs the control information to at least one of first mobile object 1, second mobile object 1, or third mobile object 1.

When each of the plurality of mobile objects 1 is located in a remoting-required location, each of a plurality of workers 2 performs at least one of remote operation or remote monitoring of such mobile object 1. Stated differently, when mobile object 1 is located in location A, for example, each of the plurality of workers 2 performs at least one of remote operation or remote monitoring of such mobile object 1, and when mobile object 1 is located in location B, each of the plurality of workers 2 performs at least one of remote operation or remote monitoring of such mobile object 1. Note that the number of workers 2 is not limited to a specific number.

In the present embodiment, computer-implemented information output device 10 includes travel information obtainer 12, location information obtainer 14, determiner 16, generator 18, outputter 20, worker manager 22, worker allocator 24, remote controller 26, and storage 28.

Travel information obtainer 12 obtains travel information. The travel information is information relating to the travel of mobile object 1 which is capable of autonomously traveling and being subjected to at least one of remote operation or remote monitoring. In the present embodiment, the travel information includes information relating to the travel of each of the plurality of mobile objects 1. The information relating to the travel of mobile object 1 includes, for example, information indicating the travel route of mobile object 1, information indicating the position of mobile object 1, and information indicating the travel speed of mobile object 1. The travel information is stored, for example, in storage 28, from which travel information obtainer 12 obtains the travel information.

The information indicating the travel route of mobile object 1 is, for example, map information, etc. showing a scheduled travel route on which mobile object 1 is to travel and showing a map of the travel route of mobile object 1. For example, travel information obtainer 12 obtains the information indicating the travel route of mobile object 1 from, for example, a delivery planning system (not illustrated) that determines a travel route of mobile object 1. The delivery planning system may be included, for example, inside of computer-implemented information output device 10 or outside of information output device 10.

The information indicating the position of mobile object 1 is, for example, coordinate information, etc. indicating the current position of mobile object 1 and indicating the coordinate values that represent the position of mobile object 1. Mobile object 1 includes, for example, a positioning system such as a global positioning system (GPS). Travel information obtainer 12 wirelessly communicates with mobile object 1, for example, to obtain, from mobile object 1, the information indicating the position of mobile object 1.

The information indicating the travel speed of mobile object 1 is, for example, speed information, etc. indicating a possible speed at which mobile object 1 travels or the actual speed at which mobile object 1 is traveling, and showing the speed value that represents the travel speed of mobile object 1. The possible speed at which mobile object 1 travels is, for example, the legal speed, etc. of a road on which mobile object 1 is traveling. For example, travel information obtainer 12 obtains the information indicating the travel speed of mobile object 1 from the delivery planning system, etc. Travel information obtainer 12 wirelessly communicates with mobile object 1, for example, to obtain, from mobile object 1, the information indicating the travel speed of mobile object 1.

Location information obtainer 14 obtains location information. The location information is information relating to remoting-required locations where at least one of remote operation or remote monitoring is required. The location information includes, for example, at least one of information indicating the positions of the remoting-required locations, information indicating the times at which the remoting-required locations are present, and information indicating a condition for being a remoting-required location. The location information is stored, for example, in storage 28, from which location information obtainer 14 obtains the location information.

The information indicating the positions of the remoting-required locations is, for example, coordinate information, etc. indicating the coordinate values that represent the positions of the remoting-required locations. The information indicating the positions of the remoting-required locations is, for example, map information indicating a map that shows the positions of the remoting-required locations. The information indicating the positions of the remoting-required locations indicates, for example, the position of location A and the position of location B. Location information obtainer 14 communicates with, for example, a device, etc. holding the information indicating the positions of the remoting-required locations, to obtain, from such device, etc., the information indicating the positions of the remoting-required locations.

The information indicating the times at which the remoting-required locations are present is, for example, time table information showing a time table on which the times at which the remoting-required locations are present are shown. For example, the information indicating the times at which the remoting-required locations are present indicates the times at which location A and location B become remoting-required locations. For example, location information obtainer 14 communicates with a device, etc. holding the information indicating the times at which the remoting-required locations are present, to obtain, from such device, etc., the information indicating the times at which the remoting-required locations are present.

The information indicating the condition for being a remoting-required location is, for example, data, etc. indicating the condition for being a remoting-required location. The condition for being a remoting-required location is, for example, that a rule such as a law requires at least one of remote operation or remote monitoring, that the traffic volume such as the volume of vehicles and people is greater than or equal to a predetermined volume, that a predetermined vehicle passes, that the date and time are predetermined date and time, that a predetermined event is scheduled in the neighborhood, etc. Location information obtainer 14 communicates with a device, etc. holding the information indicating the condition for being a remoting-required location, to obtain, from such device, etc., the information indicating the condition for being a remoting-required location.

Determiner 16 determines whether two or more mobile objects 1 will be located in one or more remoting-required locations at the same timing, on the basis of the travel information and the location information. In other words, determiner 16 predicts whether two or more mobile objects 1 will be located in one or more remoting-required locations at the same timing, on the basis of the travel information and the location information. For example, determiner 16 determines whether two or more mobile objects 1, among the plurality of mobile objects 1, will be located in one or more remoting-required locations at the same timing, on the basis of the travel information and the location information.

For example, determiner 16 identifies the position of each of the plurality of mobile objects 1 on the basis of the travel information, identifies the position of each of the one or more remoting-required locations on the basis of the location information, and determines whether two or more mobile objects 1, among the plurality of mobile objects 1, will be located in one or more remoting-required locations at the same timing, on the basis of the position of each of the plurality of mobile objects 1 and the position of each of the one or more remoting-required locations. When the condition for being a remoting-required location is that a rule such as a law requires at least one of remote operation or remote monitoring, for example, determiner 16 identifies, as a remoting-required location, a location where at least one of remote operation or remote monitoring is required by a rule such as a law.

For example, determiner 16 estimates the timing at which mobile object 1 will be located in a remoting-required location, using the distance from mobile object 1 to the remoting-required location and the travel speed of mobile object 1. For example, determiner 16 divides the distance from mobile object 1 to the remoting-required location by the travel speed of mobile object 1, thereby calculating the time required by mobile object 1 to enter the remoting-required location and estimating the timing at which mobile object 1 will be located in the remoting-required location.

Two or more mobile objects 1 comprise, for example, more than a predetermined number of mobile objects 1. The predetermined number is, for example, the number of workers 2 who perform at least one of remote operation or remote monitoring. In the present embodiment, the number of workers 2 is 2. In other words, the predetermined number is 2 in the present embodiment. Stated differently, determiner 16 determines whether, for example, the number of mobile objects 1 that is greater than 2 will be located in one or more remoting-required locations at the same timing. Stated differently, determiner 16 determines whether, for example, three or more mobile objects 1 will be located in one or more remoting-required locations at the same timing.

When two or more mobile objects 1 are determined to be located in one or more remoting-required locations at the same timing, generator 18 generates control information for controlling at least one of two or more mobile objects 1 to prevent two or more mobile objects 1 from being located in one or more remoting-required locations at the same timing.

When the number of mobile objects 1 that is greater than the predetermined number are determined to be located in one or more remoting-required locations at the same timing, for example, generator 18 generates control information that enables the number of mobile objects 1 that will be located in one or more remoting-required locations at the same timing to be the predetermined number or less. When the predetermined number is 2 and four mobile objects 1 are determined to be located in one or more remoting-required locations at the same timing, for example, generator 18 generates control information for controlling two of four mobile objects 1 to prevent the number of mobile objects 1 that is greater than 2 from being located in one or more remoting-required locations at the same timing.

For example, generator 18 includes, as at least one of two or more mobile objects 1, at least one of mobile object 1 whose travel speed is changeable, mobile object 1 whose travel route is changeable, mobile object 1 that is stoppable, mobile object 1 whose departure time is changeable, or mobile object 1 that can move backward, and generates control information for controlling such at least one mobile object 1. When three mobile objects 1 are determined to be located in one or more remoting-required locations at the same timing and mobile object 1 whose travel speed is changeable is included in such three mobile objects 1, for example, generator 18 determines that control information is to be generated for such mobile object 1, and generates control information for controlling such mobile object 1.

For example, generator 18 incorporates, in the control information, at least one of information for changing the travel speed of mobile object 1, information for changing the travel route of mobile object 1, information for stopping mobile object 1, information for changing the departure time of mobile object 1, or information for causing mobile object 1 to move backward. To generate control information for controlling mobile object 1 whose travel speed is changeable, for example, generator 18 incorporates, in the control information, the information for changing the travel speed of mobile object 1.

Outputter 20 outputs the control information. When two or more mobile objects 1 are determined to be located in one or more remoting-required locations at the same timing, for example, outputter 20 outputs, to at least one of two or more mobile objects 1, the control information for controlling such at least one mobile object 1 to prevent two or more mobile objects 1 from being located in one or more remoting-required locations at the same timing. When the control information includes the information for changing the travel speed of mobile object 1, for example, mobile object 1 that receives the control information changes the travel speed, on the basis of the control information.

Worker manager 22 manages the number of workers 2, etc.

Worker allocator 24 allocates worker 2 to mobile object 1 located in a remoting-required location.

Remote controller 26 receives an operation performed by worker 2, and controls mobile object 1 located in a remoting-required location, on the basis of such operation.

The functional configuration of information output device 10 is as described above.

FIG. 2 is a flowchart showing an example of the computer-implemented information output method performed by information output device 10 shown in FIG. 1. FIG. 3 through FIG. 12 are first through tenth diagrams for explaining an example of the information output method shown in FIG. 2. With reference to FIG. 2 through FIG. 12, the following describes an example of the information output method performed by computer-implemented information output device 10.

As shown in FIG. 2, travel information obtainer 12 first obtains the travel information relating to the travel of mobile object 1 which is capable of autonomously traveling and being subjected to at least one of remote operation or remote monitoring (step S1). As described above, the travel information includes, for example, the information indicating the travel route of mobile object 1, the information indicating the position of mobile object 1, and the information indicating the speed of mobile object 1.

Note that the travel information may also include, for example, road surface information indicating a condition of the road surface of a road on which mobile object 1 travels, congestion information indicating a congestion state of the travel route on which mobile object 1 travels, traffic information indicating a status of a traffic infrastructure (signal, crosswalk, etc.) on the travel route on which mobile object 1 travels, work operation information indicating a status of a work operation carried out on the travel route on which mobile object 1 travels, etc. These instances of information may be observed by, for example, a plurality of mobile objects 1, a traffic participant (pedestrian, etc.), a traffic infrastructure, or an external device of computer-implemented information output device 10, etc.

After travel information obtainer 12 obtains the travel information, location information obtainer 14 obtains the location information relating to the remoting-required locations where at least one of remote operation or remote monitoring is required (step S2). Note, for example, that location information obtainer 14 may obtain the location information before travel information obtainer 12 obtains the travel information.

After location information obtainer 14 obtains the location information, determiner 16 calculates the timing at which mobile object 1 will be located in a remoting-required location (step S3). For example, determiner 16 calculates the timing at which each of a plurality of mobile objects 1 will be located in a remoting-required location.

In calculating the timing at which mobile object 1 will be located in a remoting-required location, for example, determiner 16 identifies the position of the remoting-required location on the basis of the location information.

For example, the location information indicates the condition for being a remoting-required location, which specifies, for example, that the traffic volume (volume of people, etc.) is greater than or equal to a predetermined volume. In this case, for example, determiner 16 obtains data relating to the traffic volume observed by a plurality of mobile objects 1, a traffic participant, a traffic infrastructure, etc., and estimates the traffic volume of each of the locations. Determiner 16 then identifies, as a remoting-required location, a location where the traffic volume is greater than or equal to the predetermined volume.

The location information also indicates, for example, the condition for being a remoting-required location, which specifies, for example, that a specified type of mobile object 1 passes through a certain location. In this case, for example, determiner 16 obtains the width, the entire length, the height, the maximum speed, the weight, etc. of each of the plurality of mobile objects 1, and determines whether each of the plurality of mobile objects 1 corresponds to mobile object 1 of the specified type. When the specified type of mobile object 1 travels in the foregoing certain location, determiner 16 determines that such certain location is a remoting-required location. Regarding a road whose width is 2.5 m, for example, determiner 16 does not determine that such road is a remoting-required location when mobile object 1 whose width is 70 cm or less travels thereon. Meanwhile, determiner 16 determines that such road is a remoting-required location when mobile object 1 whose width is greater than 70 cm travels thereon.

The location information also indicates, for example, the condition for being a remoting-required location, which specifies, for example, that a predetermined event is carried out in the neighborhood of a certain location on predetermined date and time. In this case, for example, determiner 16 obtains information indicating the date and time, information indicating the schedule of the predetermined event, etc. When the predetermined event is carried out in the neighborhood of the foregoing certain location on the predetermined date and time, determiner 16 determines that such certain location is a remoting-required location. For example, determiner 16 determines that a crosswalk in the neighborhood of a stadium where the predetermined event is carried out is a remoting-required location on Saturdays, Sundays, and public holidays, but not on weekdays. Also, for example, determiner 16 determines that a crosswalk in the neighborhood of the stadium where the predetermined event is carried out is a remoting-required location during the time of day when the predetermined event is carried out, but not during the time of day when the predetermined event is not carried out.

Note that determiner 16 may also obtain sensor data, video data, sound data, etc. that were observed when mobile object 1 of the same type as the type of certain mobile object 1 traveled in the past in a remoting-required location, and determine that a location around such certain mobile object 1 is a remoting-required location when certain mobile object 1 observes the same data as those instances of data. Determiner 16 may also obtain data on a remoting-required location from a road surface sensor such as millimeter-wave, terahertz-wave, ultrasonic, radar, or LiDAR road surface sensor or observed by an artificial satellite, etc., and determine that a location where the same data as those instances of data is observed is a remoting-required location. Determiner 16 may also obtain, for example, weather data on a remoting-required location (fog, snow, rain, yellow sand, etc.), and determine that a location where the same data as such data is observed is a remoting-required location. Determiner 16 may also determine whether a location is a remoting-required location, for example, depending on the radio wave condition. Determiner 16 may also obtain, for example, data, etc. obtained by simulation of a remoting-required location, and determine that a location where the same data as such data is observed is a remoting-required location. Determiner 16 may also determine, for example, that a certain location is a remoting-required location only on a predetermined day of the week.

Determiner 16 may also obtain, for example, data indicating the size, the position, and the speed of a traffic participant observed in the vicinity of a remoting-required location, and determine that a certain location is a remoting-required location when the same data as such data is observed in the vicinity of such certain location. Determiner 16 may also obtain, for example, data indicating an area which is closed, in which a work operation is carried out, etc., and determine that the area indicated by such data is a remoting-required location. Determiner 16 may also obtain, for example, data indicating an area where mobile object 1 put on sudden brake in the past, and determine that the area indicated by such data is a remoting-required location. Determiner 16 may also obtain data indicating, for example, a facial expression, screaming, the level of astonishment, the line of sight, etc., of a person observed by mobile object 1, and determine that an area where such data is observed is a remoting-required location. Determiner 16 may also obtain data relating to the age and personality of a person who lives or works in the vicinity of a remoting-required location, estimate the attribute of the person on the basis of such data, and determine whether such location is a remoting-required location, on the basis of the attribute. Determiner 16 may also obtain questionnaire data relating to the level of acceptance of mobile object 1 by a person who lives or works in the vicinity of a remote requires location, and determine whether to regard such location as a remoting-required location, on the basis of such questionnaire data.

After identifying the position of the remoting-required location in calculating the timing at which mobile object 1 will be located in a remoting-required location, determiner 16 estimates the timing at which mobile object 1 will be located in the remoting-required location, on the basis of the travel information. As described above, determiner 16 estimates the timing at which mobile object 1 will be located in the remoting-required location, using, for example, the distance from mobile object 1 to the remoting-required location and the travel speed of mobile object 1. Note, for example, that determiner 16 may correct the travel speed of mobile object 1 on the basis of the road surface information, allow for stopping time of mobile object 1 on the basis of the congestion information and the traffic information, and allow for the change of the travel route that is made on the basis of the work operation information. Note that the travel speed, the stopping time, etc. may be determined, for example, using the travel history of mobile object 1 itself or another mobile object 1 that travelled under the same condition in the past, or using information set by a manager.

Note that determiner 16 may obtain the travel information, the location information, etc. in real time and estimate the timing at which mobile object 1 will be located in the remoting-required location in real time. Also, for example, determiner 16 may obtain the travel information, the location information, etc. at regular time intervals and estimate the foregoing timing at regular time intervals. Determiner 16 may also estimate such timing when, for example, a predetermined condition is satisfied. The predetermined condition is, for example, that mobile object 1 has approached a remoting-required location, that a remoting-required location is newly identified, that the timing at which mobile object 1 enters a remoting-required location gets earlier or later than scheduled, or the travel route of mobile object 1 has been changed.

After calculating the timing at which mobile object 1 will be located in the remoting-required location, determiner 16 determines whether two or more mobile objects 1 will be located in one or more remoting-required locations at the same timing, using the calculated timing (step S4). Two or more mobile objects 1 comprise, for example, more than a predetermined number of mobile objects 1. The predetermined number is, for example, the number of workers 2. The predetermined number is also the number of workers 2 who are actually able to perform at least one of remote operation or remote monitoring. The predetermined number may be, for example, changeable.

When determiner 16 determines that two or more mobile objects 1 will not be located in one or more remoting-required locations at the same timing (No in step S4), information output device 10 ends the processing.

When determiner 16 determines that two or more mobile objects 1 will be located in one or more remoting-required locations at the same timing (Yes in step S4), generator 18 determines at least one mobile object 1, among two or more mobile objects 1, that is to be controlled to prevent such two or more mobile objects 1 from being located in one or more remoting-required locations at the same timing (step S5). For example, generator 18 includes, as the at least one mobile object 1, at least one of mobile object 1 whose travel speed is changeable, mobile object 1 whose travel route is changeable, mobile object 1 that is stoppable, mobile object 1 whose departure time is changeable, or mobile object 1 that can move backward. Also, for example, generator 18 determines, as the at least one mobile object 1, the number of mobile objects 1 that is the number obtained by subtracting a predetermined number from the number of two or more mobile objects 1 determined to be located in one or more remoting-required locations at the same timing.

For example, generator 18 includes, as the at least one mobile object 1, mobile object 1, the travel speed of which is changeable within the travel speed range defined by a rule and which does not affect the travel of other traffic participants (vehicles, etc.). Generator 18 also includes, as the at least one mobile object 1, mobile object 1, the travel speed of which is changeable within the travel speed range defined by the rule and which is able to arrive at the destination in time even when the travel speed is changed.

Also, for example, generator 18 includes, as the at least one mobile object 1, mobile object 1 whose timing of being located in a remoting-required location can be shifted by changing the travel route, and mobile object 1 that can be prevented from being located in a remoting-required location by changing the travel route. Note that generator 18 does not include, as the at least one mobile object 1, mobile object 1 that cannot arrive at the destination within a permissible range of the time at which mobile object 1 should arrive at the destination, as a result of changing the travel route. As shown in FIG. 3, when the timing at which first mobile object 1 will be located in location C that is a remoting-required location on the way to a first destination and the timing at which second mobile object 1 will be located in location D that is a remoting-required location on the way to a second destination are the same, for example, generator 18 includes second mobile object 1 as the at least one mobile object 1 and changes the travel route of second mobile object 1 by changing the delivery order of second mobile object 1.

Also, generator 18 includes, as the at least one mobile object 1, mobile object 1 for which a location where mobile object 1 is able to stop is available on the way from the current position to the remoting-required location. For example, generator 18 determines whether there is a stoppable location, on the basis of map information, data observed by mobile object 1, data observed by a traffic infrastructure, etc. The stoppable location is, for example, a landing in a common use space (passage) of an apartment, the central portion of a crosswalk that passes plural-lane road, a road shoulder, etc. For example, a stoppable location may be preliminarily registered or a location that satisfies a predetermined condition may be determined to be a stoppable location. As shown in FIG. 4, when the timing at which first mobile object 1 will be located in location E that is a remoting-required location on the way to the first destination and the timing at which second mobile object 1 will be located in location F that is a remoting-required location on the way to the second destination are the same, for example, generator 18 includes, as the at least one mobile object 1, second mobile object 1 for which a stoppable location is available on the way to location F, such as a location for fuel replenishment, cleaning, maintenance work, etc., and causes second mobile object 1 to stop for a predetermined time length. When the stoppable location is a fuel replenishment location, for example, it is effective since a task for mobile object 1, such as fuel replenishment, can also be carried out in addition to stopping mobile object 1. When fuel replenishment is originally scheduled for mobile object 1, for example, it is possible to carry out fuel replenishment ahead of the schedule. Meanwhile, when fuel replenishment is not scheduled for mobile object 1, for example, an enquiry may be made to an operator to ask, for example, whether fuel replenishment is wished to be carried out for mobile object 1 when mobile object 1 is stopped. Also, when a plurality of stoppable locations are available and a stoppable location where a task such as fuel replenishment is possible is included in such plurality of stoppable locations, for example, mobile object 1 may be preferentially stopped at a stoppable location where a task can be carried out, among the plurality of stoppable locations.

Also, for example, generator 18 includes, as the at least one mobile object 1, mobile object 1 whose departure time is changeable. For example, generator 18 also includes, as the at least one mobile object 1, mobile object 1 whose departure point is changeable. Also, for example, generator 18 includes, as the at least one mobile object 1, mobile object 1 whose departure direction is changeable. As shown in FIG. 5, when the timing at which first mobile object 1 will be located in location G that is a remoting-required location on the way to the first destination and the timing at which second mobile object 1 will be located in location H that is a remoting-required location on the way to the second destination are the same, for example, generator 18 includes, as the at least one mobile object 1, second mobile object 1 whose departure time is changeable, and changes the departure time of second mobile object 1.

For example, generator 18 also includes, as the at least one mobile object 1, mobile object 1 that does not affect the travel of other traffic participants even when such mobile object 1 moves backward. As shown in FIG. 6, when the timing at which first mobile object 1 will be located in location I that is a remoting-required location and the timing at which second mobile object 1 will be located in location I that is a remoting-required location are the same, for example, generator 18 includes, as the at least one mobile object 1, second mobile object 1 for which a stoppable location is available in a rearward direction, and causes second mobile object 1 to move backward. Note that a stoppable location may be detected on the basis of, for example, map information, the result of observation by mobile object 1, or the position and the travel route of mobile object 1. Also, of first mobile object 1 and second mobile object 1, mobile object 1 that is located closer to a stoppable location may be caused to move backward, or mobile object 1 that has sufficient lead time before the time of arriving at the destination may be caused to move backward. As shown in FIG. 7, when the timing at which first mobile object 1 will be located in location J that is a remoting-required location and the timing at which second mobile object 1 will be located in location J that is a remoting-required location are the same, for example, generator 18 may include, as the at least one mobile object 1, second mobile object 1 that is located closer to a stoppable location in a forward direction, and cause second mobile object 1 to move forward to stop at such stoppable location.

Note that when the number of mobile objects 1 whose timing of being located in a remoting-required location can be shifted is greater than the number of mobile objects 1 whose timing of being located in a remoting-required location needs to be shifted, for example, mobile object 1 whose level of permissibility to arrive at the destination at a shifted timing is high may be preferentially included as the at least one mobile object 1. The level of permissibility to arrive at the destination at a shifted timing may be determined, for example, on the basis of the service status of mobile object 1 or the service type of mobile object 1, etc.

More specifically, when the number of mobile objects 1 whose timing of being located in a remoting-required location can be shifted is greater than the number of mobile objects 1 whose timing of being located in a remoting-required location needs to be shifted, for example, mobile object 1 whose scheduled time of arriving at the destination does not vary much, mobile object 1 that is out of service, mobile object 1 for security or cleaning, and mobile object 1 that is subjected to remote operation or remote monitoring for a long time may be preferentially included as the at least one mobile object 1. The reason that mobile object 1 that is out of service is preferentially included as the at least one mobile object 1 is because the delivery is less affected if mobile object 1 that is out of service arrives at the destination at a shifted timing. The reason that mobile object 1 for security or cleaning is preferentially included as the at least one mobile object 1 is because there is no need to consider about the time at which mobile object 1 for security or cleaning arrives at the destination. The reason that mobile object 1 that is subjected to remote operation or remote monitoring for a longer time is preferentially included as the at least one mobile object 1 is because it is possible to preferentially perform remote operation or remote monitoring of mobile object 1 that is subjected to remote operation or remote monitoring for a shorter time and thus to reduce the time for which mobile object 1 is to be stopped.

Note that, for the possible case where remote operation or remote monitoring is suddenly requested, for example, the timing of a larger number of mobile objects 1 may be shifted than the number of mobile objects 1 whose timing of being located in remoting-required locations need to be shifted. With this, it is possible to ensure workers 2 who can cope with a sudden request for remote operation or remote monitoring. This thus enables to promptly cope with a sudden request for remote operation or remote monitoring. The case where remote operation or remote monitoring is suddenly requested includes, for example, the cases where the number of traffic participants suddenly increases, where the number of vehicles suddenly increases, where an accident has occurred on the travel route (near the route) on which mobile object 1 is scheduled to travel, etc.

Also, when the number of mobile objects 1 whose timing of being located in a remoting-required location can be shifted is smaller than the number of mobile objects 1 whose timing of being located in a remoting-required location needs to be shifted, for example, generator 18 notifies, for example, worker 2 about this. Generator 18 notifies, for example, about the timing at which a request for remote operation or remote monitoring is coming, the number of such requests, mobile object 1 that makes the request, the details of remote operation, etc. Also, when mobile object 1 is searched for whose timing of being located in a remoting-required location can be shifted depending on a control, such as changing of the travel route and changing of the departure time, for example, generator 18 may provide a notification that prompts to change the details of the control. Also, when remote operation or remote monitoring of mobile object 1 located in a remoting-required location cannot be performed, and a security person who can rush to the site is assigned, a notification may be provided to the security person to cause such security person to control mobile object 1 (e.g., operation or monitoring, etc. to be performed in the site) and cause such security person to rush to the site and cope with the situation. Also, for example, information on the security person (e.g., the position, task status, etc.) may be displayed to an operator so that the operator can request the security person to cope with the situation. Also, for example, information output device 10 may determine a candidate security person to be dispatched to the site, and display the determined candidate to the operator.

Also, for example, two or more controls (e.g., changing of the travel speed and stopping of mobile object 1) may be performed on one mobile object 1. Also, for example, priority levels are set one to one to a plurality of controls, and mobile object 1 on which a control with a higher priority level can be performed may be preferentially controlled. The plurality of controls are, for example, changing of the travel speed, changing of the travel route, stopping of mobile object 1, changing of the departure time, moving mobile object 1 backward, etc. When a plurality of controls are present, for example, a control may be selected that enables the time of arriving at the destination to be the earliest. Also, for example, a control may be determined on the basis of at least one of the distance from the position of mobile object 1 to a remoting-required location or the time required to travel from the position of mobile object 1 to the remoting-required location. When the distance from the position of mobile object 1 to the remoting-required location is shorter than a predetermined distance, for example, a control may be used other than the changing of the travel speed.

Also, mobile object 1 whose timing of being located in a remoting-required location is to be shifted and a control to be performed on such mobile object 1 may be determined, for example, on the basis of the skills of a manager (e.g., the number of times the manager has coped with remote operation, the time length for which the manager has spent on coping with the remote operation), and the state of the manager (accumulated time spent on remote monitoring and controls, time for which the manager has been successively performing remote control, etc.). At this time, information for supporting the manager to determine these may be displayed in a superimposed manner. For example, such information indicates the distance from the position of mobile object 1 to the remoting-required location, the time required to travel from the position of mobile object 1 to the remoting-required location, a control to be performed on mobile object 1 whose timing of being located in the remoting-required location is to be shifted, variations in the scheduled time of arriving at the destination that are caused as a result of controlling such mobile object 1, the operating status of mobile object 1 (during delivery, out-of-service, etc.), time required for worker 2 to initiate remote operation or remote monitoring, etc.

Let us get back to the description of FIG. 2. After determining at least one mobile object 1 to be controlled to prevent two or more mobile objects 1 from being located in one or more remoting-required locations at the same timing, generator 18 generates control information for controlling such at least one mobile object 1 (step S6). For example, generator 18 incorporates, in the control information, at least one of information for changing the travel speed of mobile object 1, information for changing the travel route of mobile object 1, information for stopping mobile object 1, information for changing the departure time of mobile object 1, or information for causing mobile object 1 to move backward.

When changing the travel seeped of first mobile object 1, for example, generator 18 determines the travel speed of first mobile object 1 that enables first mobile object 1 to be located in a remoting-required location after the completion of remote operation or remote monitoring of second mobile object 1 that is estimated to be located in a remoting-required location at the same timing as that of first mobile object 1, and generates control information for causing first mobile object 1 to travel at such travel speed. Note that when a plurality of mobile objects 1 are present that are estimated to be located in remoting-required locations at the same timing as that of first mobile object 1, the travel speed of first mobile object 1 is determined that enables first mobile object 1 to be located in the remoting-required location after the completion of remote operation or remote monitoring of mobile object 1 whose remote operation or remote monitoring ends the earliest among the plurality of mobile objects 1. As shown in FIG. 8, when first mobile object 1, second mobile object 1, and third mobile object 1 are estimated to be located in one or more remoting-required locations (location K, location L, and location M) at the same timing and when third mobile object 1 is to be controlled, for example, the travel speed of third mobile object 1 is determined that enables third mobile object 1 to be located in the remoting-required location after the completion of remote operation or remote monitoring of one of first mobile object 1 and second mobile object 1 whose remote operation or remote monitoring ends earlier, and the speed of third mobile object 1 is decreased. As shown in FIG. 9, when first mobile object 1, second mobile object 1, and third mobile object 1 are estimated to be located in remoting-required locations (location N, location O, and location P) at the same timing and when third mobile object 1 is to be controlled, for example, the travel speed of third mobile object 1 is determined that enables remote operation or remote monitoring of third mobile object 1 to end before remote operation or remote monitoring of first mobile object 1 and second mobile object 1 starts, and the speed of third mobile object 1 is increased.

Also, when changing the travel speed of first mobile object 1 and determining the travel speed at which first mobile object 1 is to travel, for example, generator 18 determines the time length for which first mobile object 1 is caused to travel at such travel speed, and generates control information for causing first mobile object 1 to travel at such travel speed for such time length. Also, for example, generator 18 determines the timing and position, etc. at which mobile object 1 is to travel at such travel speed for such time length, and generates control information for causing mobile object 1 to travel on the basis of these. Note that the amount of decreasing the travel speed may be determined, for example, in accordance with the distance from the current position of mobile object 1 to the remoting-required location.

Note that, on the basis of the history in the past, for example, time required for remote operation and time required for remote monitoring may be the time for remote operation and the time for remote monitoring that were required at the same location as or a similar location to the remoting-required location. For example, the time required for remote operation may be calculated, using (distance through which mobile object 1 travels by remote operation) × (time required for remote operation per unit distance).

Also, when remote operation or remote monitoring of mobile object 1 that arrives at a remoting-required location the earliest ends earlier (later) than scheduled, among two or more mobile objects 1 that are estimated to be located in the remoting-required locations at the same tinning, for example, the travel speed of mobile object 1 that will be located in the remoting-required location later may be increased (decreased). For example, the amount of increasing (decreasing) the speed may be determined, on the basis of the difference between the scheduled end time of remote operation or remote monitoring and the actual end time of remote operation or remote monitoring.

As shown in FIG. 10, a remoting-required location may be, for example, an area. Note that a remoting-required location may also be, for example, a point.

Also, when the travel route of mobile object 1 is changed as shown in FIG. 11, and a travel route that passes through a remoting-required location as shown in (a) in FIG. 11 and a travel route that does not pass through a remoting-required location as shown in (b) in FIG. 11 are present, for example, control information may be generated that enables mobile object 1 to travel on one of these travel routes through which mobile object 1 can arrive at the destination the earliest. Note that not only the travel route, but also the travel speed may be changed.

When mobile object 1 is to be stopped, for example, generator 18 incorporates, in the control information, the position of a stopping location where mobile object 1 is to be stopped and stopping time for which mobile object 1 is to be stopped. For example, the stopping time for which first mobile object 1 is to be stopped is determined to be time that is longer than or equal to the time required for remotely operate or remotely monitor second mobile object 1 that is estimated to be located in a remoting-required location at the same timing as that of first mobile object 1. Note that the stopping time for which first mobile object 1 is to be stopped may be determined, for example, also in consideration of the time required by first mobile object 1 to travel from the stopping location to the remoting-required location. This enables a more accurate calculation of the stopping time for which first mobile object 1 should be stopped. Note that when remote operation or remote monitoring of second mobile object 1 that is estimated to be located in a remoting-required location at the same timing as that of first mobile object 1 ends earlier than scheduled, control information may be generated for changing the stopping time.

Also, when the departure time of first mobile object 1 is to be changed, for example, determiner 16 determines the departure time of first mobile object 1 that enables first mobile object 1 to be located in a remoting-required location after the elapse of time that is longer than or equal to the time required to remotely operate or remotely monitor second mobile object 1 that is estimated to be located in a remoting-required location at the same timing as that of first mobile object 1. Note that when remote operation or remote monitoring of second mobile object 1 ends earlier than scheduled, control information may be generated for further changing the departure time.

Also, when first mobile object 1 is caused to move backward, for example, first mobile object 1 is caused to move backward and then move forward so that first mobile object 1 will be located in the remoting-required location after the elapse of time that is longer than or equal to the time required to remotely operate or remotely monitor second mobile object 1 that is estimated to be located in a remoting-required location at the same timing as that of first mobile object 1. For example, the control information indicates, for example, the distance through which first mobile object 1 is caused to move backward, the position at which first mobile object 1 is caused to move backward, the travel speed at which first mobile object 1 is caused to move backward, waiting time for which first mobile object 1 waits after moving backward, etc. Note that when remote operation or remote monitoring of second mobile object 1 ends earlier (later) than scheduled, control information may be generated for decreasing (increasing) the distance for which first mobile object 1 moves backward or for increasing (decreasing) the travel speed at which first mobile object 1 moves backward.

Note that the control information may be, for example, information for controlling the travel of mobile object 1 by operating a traffic infrastructure. For example, the control information may be information for stopping mobile object 1 by putting on a red signal. The control information may also be, for example, information for causing mobile object 1 to travel or stop for a predetermined time by putting on a red signal and a green signal only for a predetermined time. The control information may also be, for example, information for causing mobile object 1 to travel in a direction by displaying a sign indicating such direction. The control information may also be, for example, information for causing mobile object 1 to travel smoothly by displaying, on a mobile terminal of a person on the travel route of mobile object 1, indicating that the person should not enter the travel route, to decrease the volume of people on such travel route. The control information may also be, for example, information for causing mobile object 1 to travel smoothly by displaying, on a car navigation system of a vehicle on the travel route of mobile object 1, indicating that the vehicle should not enter the travel route, to decrease the traffic volume on such travel route.

Let us get back to the description of FIG. 2. After generator 18 generates the control information, outputter 20 outputs the control information (step S7). For example, outputter 20 outputs the control information to at least one mobile object, among two or more mobile objects 1 that are determined to be located in one or more remoting-required locations at the same timing, which is a mobile object to be controlled to prevent such two or more mobile objects 1 from being located in the one or more remoting-required locations at the same timing.

Note, for example, that the predetermined number may be changed depending on the time of day to change the number of two or more mobile objects 1 that are allowed to be located in one or more remoting-required locations at the same timing.

Also, for example, second mobile object 1 may be identified that has the possibility of entering a remoting-required location or the surrounding area of such remoting-required location during a predetermined time period, when first mobile object 1 is located in such remoting-required location as shown in (a) in FIG. 12, and second mobile object 1 may be controlled to cause it not to enter the remoting-required location or the surrounding area of such remoting-required location as shown in (b) in FIG. 12. The predetermined time period is, for example, the time required to perform remote operation or remote monitoring of first mobile object 1. The surrounding area of the remoting-required location is, for example, an area within a predetermined distance from such remoting-required location. Also, second mobile object 1 is detected, for example, on the basis of information indicating the position of second mobile object 1, information indicating the travel route of second mobile object 1, etc. Also, when first mobile object 1 is located in a remoting-required location and sends a request for remote operation or remote monitoring to worker 2, and second mobile object 1 is already located in such remoting-required location at that time, for example, second mobile object 1 may be controlled to be caused to move away from such remoting-required location.

Also, when mobile object 1 is to be stopped, for example, the hazard light of such mobile object 1 may be put on. Also, when mobile object 1 is caused to start traveling again after being stopped, for example, such mobile object 1 may autonomously travel. Also, to prevent a person, an animal, etc. from approaching the surrounding of mobile object 1, for example, such mobile object 1 may output, for example, sound, light, display, ultrasonic wave, etc.

Also, when a delay occurs in the timing at which first mobile object 1 enters a remoting-required location, for example, second mobile object 1 that is scheduled to enter a remoting-required location after first mobile object 1 may be allowed to enter the remoting-required location ahead of first mobile object 1.

An example of the information output method performed by computer-implemented information output device 10 has been described above.

As described above, computer-implemented information output device 10 and so forth are capable of preventing two or more mobile objects 1 from being located in one or more remoting-required locations at the same timing. This prevents and reduces traffic obstruction.

The computer-implemented information output method according to the embodiment includes: obtaining travel information relating to travel of mobile object 1 which is capable of autonomously traveling and being subjected to at least one of remote operation or remote monitoring; obtaining location information relating to a remoting-required location where at least one of remote operation or remote monitoring is required; determining whether two or more mobile objects 1 will be located in one or more remoting-required locations at the same timing, based on the travel information and the location information; generating control information for controlling at least one mobile object 1, among two or more mobile objects 1, to prevent two or more mobile objects 1 from being located in the one or more remoting-required locations at the same timing, when two or more mobile objects 1 are determined to be located in the one or more remoting-required locations at the same timing; and outputting the control information.

With this, control information is generated and outputted for controlling at least one mobile object 1, among two or more mobile objects 1, to prevent such two or more mobile objects 1 from being located in one or more remoting-required locations at the same timing. This prevents two or more mobile objects 1 from being located in one or more remoting-required locations at the same timing. It is thus possible to prevent, for example, any one of two or more mobile objects 1 from failing to travel in a remoting-required location because of the unavailability of remote operation or remote monitoring. This consequently prevents and reduces traffic obstruction.

Also, in the computer-implemented information output method according to the embodiment, two or more mobile objects 1 comprise more than a predetermined number of mobile objects 1.

With this, it is possible to prevent two or more mobile objects 1 from being located in one or more remoting-required locations at the same timing, when the number of two or more mobile objects 1 is greater than the predetermined number. Consequently, it is possible to more effectively prevent and reduce traffic obstruction.

Also, in the computer-implemented information output method according to the embodiment, the predetermined number may be a total number of workers 2 who perform at least one of remote operation or remote monitoring.

With this, it is possible to prevent two or more mobile objects 1 from being located in one or more remoting-required locations at the same timing, when the number of two or more mobile objects 1 is greater than the number of workers 2 who perform at least one of remote operation or remote monitoring. Consequently, it is possible to more effectively prevent and reduce traffic obstruction.

Also, in the computer-implemented information output method according to the embodiment, the travel information includes information indicating a travel route of mobile object 1, information indicating a position of mobile object 1, and information indicating a travel speed of mobile object 1.

With this, it is easy to calculate the timing at which mobile object 1 will be located in a remoting-required location. This facilitates the determination of whether two or more mobile objects 1 will be located in one or more remoting-required locations at the same timing. Consequently, it is easy to prevent and reduce traffic obstruction.

Also, in the computer-implemented information output method according to the embodiment, the location information includes at least one of information indicating a position of the remoting-required location, information indicating time at which the remoting-required location is present, or information indicating a condition for being the remoting-required location.

With this, it is easy to calculate the timing at which mobile object 1 will be located in a remoting-required location. This facilitates the determination of whether two or more mobile objects 1 will be located in one or more remoting-required locations at the same timing. Consequently, it is easy to prevent and reduce traffic obstruction.

Also, the computer-implemented information output method according to the embodiment includes: estimating a timing at which mobile object 1 will be located in the remoting-required location, based on a distance from mobile object 1 to the remoting-required location and a travel speed of mobile object 1, and determining whether two or more mobile objects 1 will be located in the one or more remoting-required locations at the same timing, based on the timing estimated.

With this, it is possible to more accurately determine whether two or more mobile objects 1 will be located in one or more remoting-required locations at the same timing. Consequently, it is possible to prevent and reduce traffic obstruction in a more reliable manner.

Also, the computer-implemented information output method according to the embodiment includes: including, as at least one mobile object 1, at least one of mobile object 1 whose travel speed is changeable, mobile object 1 whose travel route is changeable, mobile object 1 that is stoppable, mobile object 1 whose departure time is changeable, or mobile object 1 that is able to move backward.

With this, it is possible to prevent two or more mobile objects 1 from being located in one or more remoting-required locations at the same timing by controlling mobile object 1 that is less likely to obstruct traffic. Consequently, it is possible to further prevent and reduce traffic obstruction.

Also, the computer-implemented information output method according to the embodiment includes: incorporating, into the control information, at least one of information for changing a travel speed of mobile object 1, information for changing a travel route of mobile object 1, information for stopping mobile object 1, information for changing a departure time of mobile object 1, or information for causing mobile object 1 to move backward.

With this, it is easy to prevent two or more mobile objects 1 from being located in one or more remoting-required locations at the same timing. Consequently, it is easy to prevent and reduce traffic obstruction.

Also, computer-implemented information output device 10 according to the embodiment includes: travel information obtainer 12 that obtains travel information relating to travel of mobile object 1 which is capable of autonomously traveling and being subjected to at least one of remote operation or remote monitoring; location information obtainer 14 that obtains location information relating to a remoting-required location where at least one of remote operation or remote monitoring is required; determiner 16 that determines whether two or more mobile objects 1 will be located in one or more remoting-required locations at the same timing, based on the travel information and the location information; generator 18 that generates control information for controlling at least one mobile object 1, among two or more mobile objects 1, to prevent two or more mobile objects 1 from being located in the one or more remoting-required locations at the same timing, when two or more mobile objects 1 are determined to be located in the one or more remoting-required locations at the same timing; and outputter 20 that outputs the control information.

With this, the same operational effects as those achieved by the foregoing information output method are achieved.

Each of the elements in the foregoing embodiment may be configured in the form of an exclusive hardware product, or may be realized by executing a software program suitable for the element. Each of the elements may be realized by means of a program executer, such as a central processing unit (CPU) and a processor, reading and executing the software program recorded on a recording medium such as a hard disk and a semiconductor memory. Here, the software program that realizes the device and so forth in the foregoing embodiment is a program for causing a computer to execute the steps included in the flowchart shown in FIG. 2.

Note that the present disclosure also includes the cases described below.

(1) At least one of the foregoing devices may be, more specifically, a computer system that includes a microprocessor, a ROM, a RAM, a hard disk unit, a display unit, a keyboard, a mouse, etc. The RAM or the hard disk unit stores a computer program. By the microprocessor operating in accordance with such computer program, it is possible for at least one of the devices to accomplish its function. Here, the computer program includes a combination of a plurality of command codes indicating instructions to the computer to achieve a predetermined function.
(2) One or more, or all of the elements included in at least one of the foregoing devices may be implemented as a single system large scale integration (LSI). The system LSI is a super-multifunctional LSI that is manufactured by integrating a plurality of components onto a single chip. The system LSI is, more specifically, a computer system that includes a microprocessor, a ROM, a RAM, etc. The RAM stores a computer program. By the microprocessor operating in accordance with such computer program, it is possible for the system LSI to accomplish its function.
(3) One or more, or all of the elements included in at least one of the foregoing devices may be implemented as a single module or an IC card removable from the devices. The module or the IC card is a computer system that includes a microprocessor, a ROM, a RAM, etc. The module or the IC card may include the foregoing super-multifunctional LSI. By the microprocessor operating in accordance with a computer program, it is possible for the module or the IC card to accomplish its function. Such module or the IC card may have tamper-resistance.
(4) The present disclosure may be the method described above. The present disclosure may also be a computer program that enables such method to be implemented, using a computer, or digital signals that form the computer program.

The present disclosure may be one that is achieved by recording the computer program or the digital signals on a computer-readable recording medium such as a flexible disk, a hard disk, a compact disc (CD)-ROM, a DVD, a DVD-ROM, a DVD-RAM, a Blu-ray (registered trademark) disc (BD), and a semiconductor memory. The present disclosure may also be the digital signals recorded in such recording medium.

The present disclosure may also be configured to transmit the computer program or the digital signals via, for example, a telecommunication line, a wireless or wired communication line, a network represented by the Internet, data broadcasting, etc.

Also, the program or the digital signals may be recorded and transferred on the recording medium or transferred via, for example, the network to enable another independent computer system to carry out the present disclosure.

### [Industrial Applicability]

The present disclosure is applicable for use as, for example, a method of outputting control information for controlling a mobile object.

### [Reference Signs List]

- 10: information output device
- 12: travel information obtainer
- 14: location information obtainer
- 16: determiner
- 18: generator
- 20: outputter
- 22: worker manager
- 24: worker allocator
- 26: remote controller
- 28: storage

## Claims

1. A computer-implemented information output method comprising:
obtaining travel information relating to travel of a mobile object (1) which is capable of autonomously traveling and being subjected to at least one of remote operation or remote monitoring;
obtaining location information relating to a remoting-required location where at least one of the remote operation or the remote monitoring is required;
determining whether two or more of the mobile objects (1) will be located in one or more remoting-required locations at a same timing, based on the travel information and the location information, the two or more mobile objects (1) each being a mobile object, the one or more remoting-required locations each being a remoting-required location;
generating control information for controlling at least one mobile object, among the two or more mobile objects (1), to prevent the two or more mobile objects from being located in the one or more remoting-required locations at the same timing, when the two or more mobile objects (1) are determined to be located in the one or more remoting-required locations at the same timing;
outputting the control information,
incorporating, into the control information, at least one of information for changing a travel speed of the mobile object, information for changing a travel route of the mobile object, information for stopping the mobile object, information for changing a departure time of the mobile object, or information for causing the mobile object to move backward,
controlling one or more of the plurality of mobile objects (1) to prevent two or more mobile objects from being located in the one or more remoting-required locations at the same timing,
wherein the two or more mobile objects comprise more than a predetermined number of mobile objects, and
the predetermined number is a total number of workers who perform at least one of the remote operation or the remote monitoring.

2. The computer-implemented information output method according to claim 1,
wherein the travel information includes information indicating a travel route of the mobile object, information indicating a position of the mobile object, and information indicating a travel speed of the mobile object.

3. The computer-implemented information output method according to any one of claims 1 to 2,
wherein the location information includes at least one of information indicating a position of the remoting-required location, information indicating time at which the remoting-required location is present, or information indicating a condition for being the remoting-required location.

4. The computer-implemented information output method according to any one of claims 1 to 3, comprising:
estimating a timing at which the mobile object will be located in the remoting-required location, based on a distance from the mobile object to the remoting-required location and a travel speed of the mobile object, and determining whether the two or more mobile objects will be located in the one or more remoting-required locations at the same timing, based on the timing estimated.

5. The computer-implemented information output method according to any one of claims 1 to 4, comprising:
wherein at least one of the mobile object has a travel speed that is changeable, or whose travel route is changeable, or that is stoppable, or whose departure time is changeable, or that is able to move backward.

6. An information output device comprising:
a travel information obtainer that obtains travel information relating to travel of a mobile object which is capable of autonomously traveling and being subjected to at least one of remote operation or remote monitoring;
a location information obtainer that obtains location information relating to a remoting-required location where at least one of the remote operation or the remote monitoring is required;
a determiner that determines whether two or more mobile objects will be located in one or more remoting-required locations at a same timing, based on the travel information and the location information, the two or more mobile objects each being a mobile object, the one or more remoting-required locations each being a remoting-required location;
a generator that generates control information for controlling at least one mobile object, among the two or more mobile objects, to prevent the two or more mobile objects from being located in the one or more remoting-required locations at the same timing, when the two or more mobile objects are determined to be located in the one or more remoting-required locations at the same timing;
an outputter that outputs the control information, wherein the control information includes at least one of information for changing a travel speed of the mobile object, information for changing a travel route of the mobile object, information for stopping the mobile object, information for changing a departure time of the mobile object, or information for causing the mobile object to move backward,
a controller for controlling one or more of the plurality of mobile objects (1) to prevent two or more mobile objects from being located in the one or more remoting-required locations at the same timing,
wherein the two or more mobile objects comprise more than a predetermined number of mobile objects, and
the predetermined number is a total number of workers who perform at least one of the remote operation or the remote monitoring.

7. A program comprising instructions which, when executed by a computer, cause the computer to execute the information output method according to any one of claims 1 to 5.

## Patentansprüche

1. Computerumgesetztes Informationsausgabeverfahren, umfassend:
Erzielen von Fortbewegungsinformationen bezüglich der Fortbewegung eines mobilen Objekts (1), das in der Lage ist, sich autonom fortzubewegen, und mindestens einer Fernbedienung oder einer Fernüberwachung unterliegt;
Erzielen von Standortinformationen bezüglich eines Fernzugriff benötigenden Standorts, an dem mindestens entweder die Fernbedienung oder die Fernüberwachung benötigt wird;
Bestimmen, ob sich zwei oder mehrere der mobilen Objekte (1) zur gleichen Zeit an einem oder mehreren Fernzugriff benötigenden Standorten befinden werden, basierend auf den Fortbewegungsinformationen und den Standortinformationen, wobei die zwei oder mehreren mobilen Objekte (1) jeweils ein mobiles Objekt sind, wobei der eine oder die mehreren Fernzugriff benötigenden Standorte jeweils ein Fernzugriff benötigender Standort sind;
Generieren von Steuerinformationen zum Steuern mindestens eines mobilen Objekts, aus den zwei oder mehreren mobilen Objekten (1), um zu verhindern, dass sich die zwei oder mehreren mobilen Objekte zur gleichen Zeit an dem einen oder den mehreren Fernzugriff benötigenden Standorten befinden, wenn bestimmt wird, dass sich die zwei oder mehreren mobilen Objekte (1) zur gleichen Zeit an dem einen oder den mehreren Fernzugriff benötigenden Standorten befinden;
Ausgeben der Steuerinformationen,
Einbinden in die Steuerinformationen mindestens einer von Informationen zum Ändern einer Fortbewegungsgeschwindigkeit des mobilen Objekts, Informationen zum Ändern einer Fortbewegungsstrecke des mobilen Objekts, Informationen zum Anhalten des mobilen Objekts, Informationen zum Ändern einer Abfahrtzeit des mobilen Objekts oder Informationen zum Bewirken, dass das mobile Objekt zurücksetzt,
Steuern eines oder mehrerer der Vielzahl von mobilen Objektes (1), um zu verhindern, dass sich zwei oder mehrere mobile Objekte zur gleichen Zeit an dem einen oder den mehreren Fernzugriff benötigenden Standorten befinden,
wobei die zwei oder mehreren mobilen Objekte mehr als eine vorbestimmte Anzahl von mobilen Objekten umfassen, und
die vorbestimmte Anzahl eine Gesamtanzahl von Arbeitern ist, die mindestens eine Fernbedienung oder eine Fernüberwachung ausführen.

2. Computerumgesetztes Informationsausgabeverfahren nach Anspruch 1,
wobei die Fortbewegungsinformationen Informationen, die eine Fortbewegungsstrecke des mobilen Objekts angeben, Informationen, die eine Position des mobilen Objekts angeben, und Informationen, die eine Fortbewegungsgeschwindigkeit des mobilen Objekts angeben, umfassen.

3. Computerumgesetztes Informationsausgabeverfahren nach einem der Ansprüche 1 bis 2,
wobei die Standortinformationen mindestens eine von Informationen, die eine Position des Fernzugriff benötigenden Standorts angeben, Informationen, die eine Zeit angeben, zu welcher der Fernzugriff benötigende Standort vorhanden ist, oder Informationen, die eine Bedingung für den Fernzugriff benötigenden Standort angeben, umfassen.

4. Computerumgesetztes Informationsausgabeverfahren nach einem der Ansprüche 1 bis 3, umfassend:
Schätzen einer Zeit, zu der sich das mobile Objekt an dem Fernzugriff benötigenden Standort befinden wird, basierend auf einer Entfernung von dem mobilen Objekt zu dem Fernzugriff benötigenden Standort und einer Fortbewegungsgeschwindigkeit des mobilen Objekts, und Bestimmen, ob sich die zwei oder mehreren mobilen Objekte zur gleichen Zeit an dem einen oder den mehreren Fernzugriff benötigenden Standorten befinden werden, basierend auf der geschätzten Zeit.

5. Computerumgesetztes Informationsausgabeverfahren nach einem der Ansprüche 1 bis 4,
wobei mindestens eines der mobilen Objekte eine Fortbewegungsgeschwindigkeit aufweist, die geändert werden kann, oder dessen Fortbewegungsstrecke geändert werden kann, oder das angehalten werden kann, oder dessen Abfahrtzeit geändert werden kann, oder das zurücksetzen kann.

6. Informationsausgabevorrichtung, umfassend:
eine Vorrichtung zum Erzielen von Fortbewegungsinformationen, die Fortbewegungsinformationen bezüglich der Fortbewegung eines mobilen Objekts erzielt, das in der Lage ist, sich autonom fortzubewegen und mindestens entweder einer Fernbedienung oder einer Fernüberwachung unterliegt;
eine Vorrichtung zum Erzielen von Standortinformationen, die Standortinformationen bezüglich eines Fernzugriff benötigenden Standorts erzielt, an dem mindestens entweder eine Fernbedienung oder eine Fernüberwachung benötigt wird;
eine Bestimmungsvorrichtung, die bestimmt, ob sich zwei oder mehrere mobile Objekte zur gleichen Zeit an einem oder mehreren Fernzugriff benötigenden Standorten befinden werden, basierend auf den Fortbewegungsinformationen und den Standortinformationen, wobei die zwei oder mehreren mobilen Objekte jeweils ein mobiles Objekt sind, wobei der eine oder die mehreren Fernzugriff benötigenden Standorte jeweils ein Fernzugriff benötigender Standort sind;
einen Generator, der Steuerinformationen zum Steuern mindestens eines mobilen Objekts aus den zwei oder mehreren mobilen Objekten generiert, um zu verhindern, dass sich die zwei oder mehreren mobilen Objekte zur gleichen Zeit an dem einen oder den mehreren Fernzugriff benötigenden Standorten befinden, wenn bestimmt wird, dass sich die zwei oder mehreren mobilen Objekte zur gleichen Zeit an dem einen oder den mehreren Fernzugriff benötigenden Standorten befinden;
eine Ausgabevorrichtung, welche die Steuerinformationen ausgibt, wobei die Steuerinformationen mindestens eine von Informationen zum Ändern einer Fortbewegungsgeschwindigkeit des mobilen Objekts, Informationen zum Ändern einer Fortbewegungsstrecke des mobilen Objekts, Informationen zum Anhalten des mobilen Objekts, Informationen zum Ändern einer Abfahrtzeit des mobilen Objekts, oder Informationen zum Bewirken, dass das mobile Objekt zurücksetzt, umfassen
eine Steuervorrichtung zum Steuern eines oder mehrerer der Vielzahl von mobilen Objekten (1), um zu verhindern, dass sich zwei oder mehrere mobile Objekte zur gleichen Zeit an dem einen oder den mehreren Fernzugriff benötigenden Standorten befinden,
wobei die zwei oder mehreren mobilen Objekte mehr als eine vorbestimmte Anzahl von mobilen Objekten umfassen, und
die vorbestimmte Anzahl eine Gesamtanzahl von Arbeitern ist, die mindestens entweder eine Fernbedienung oder eine Fernüberwachung ausführen.

7. Programm, umfassend Anweisungen, die, wenn sie von einem Computer ausgeführt werden, bewirken, dass der Computer das Informationsausgabeverfahren nach einem der Ansprüche 1 bis 5 ausführt.

## Revendications

1. Procédé de sortie d'informations mis en œuvre par ordinateur comprenant les étapes suivantes :
obtenir des informations de déplacement relatives au déplacement d'un objet mobile (1) qui est en mesure de se déplacer de manière autonome et d'être soumis à au moins une parmi une opération à distance ou une surveillance à distance ;
obtenir des informations d'emplacement relatives à un emplacement nécessitant un accès à distance où au moins une parmi l'opération à distance ou la surveillance à distance est requise ;
déterminer si deux des objet mobiles (1) ou plus seront situés dans un ou plusieurs emplacements nécessitant un accès à distance au même moment sur la base des informations de déplacement et des informations d'emplacement, les deux objets mobiles (1) ou plus étant chacun un objet mobile, les un ou plusieurs emplacements nécessitant un accès à distance étant chacun un emplacement nécessitant un accès à distance ;
générer des informations de commande pour commander au moins un objet mobile des deux objets mobiles (1) ou plus pour empêcher les deux objets mobiles ou plus de se trouver dans les un ou plusieurs emplacements nécessitant un accès à distance au même moment lorsqu'il est déterminé que les deux objets mobiles (1) ou plus sont situés dans les un ou plusieurs emplacements nécessitant un accès à distance au même moment ;
délivrer les informations de commande,
incorporer dans les informations de commande au moins des informations parmi des informations pour modifier une vitesse de déplacement de l'objet mobile, des informations pour modifier un itinéraire de déplacement de l'objet mobile, des informations pour arrêter l'objet mobile, des informations pour modifier une heure de départ de l'objet mobile, ou des informations pour amener l'objet mobile à reculer,
commander un ou plusieurs de la pluralité d'objets mobiles (1) pour empêcher deux objets mobiles ou plus de se trouver dans les un ou plusieurs emplacements nécessitant un accès à distance au même moment,
dans lequel les deux objets mobiles ou plus comprennent plus qu'un nombre prédéterminé d'objets mobiles, et
le nombre prédéterminé est un nombre total de travailleurs qui effectuent au moins une parmi l'opération à distance ou la surveillance à distance.

2. Procédé de sortie d'informations mis en œuvre par ordinateur selon la revendication 1,
dans lequel les informations de déplacement comportent des informations indiquant un itinéraire de déplacement de l'objet mobile, des informations indiquant une position de l'objet mobile, et des informations indiquant une vitesse de déplacement de l'objet mobile.

3. Procédé de sortie d'informations mis en œuvre par ordinateur selon l'une des revendications 1 et 2,
dans lequel les informations d'emplacement comportent au moins des informations parmi des informations indiquant une position de l'emplacement nécessitant un accès à distance, des informations indiquant une heure à laquelle l'emplacement nécessitant un accès à distance est présent, ou des informations indiquant une condition pour être l'emplacement nécessitant un accès à distance.

4. Procédé de sortie d'informations mis en œuvre par ordinateur selon l'une des revendications 1 à 3, comprenant les étapes suivantes :
estimer un moment auquel l'objet mobile sera situé dans l'emplacement nécessitant un accès à distance sur la base d'une distance entre l'objet mobile et l'emplacement nécessitant un accès à distance et d'une vitesse de déplacement de l'objet mobile, et déterminer si les deux objets mobiles ou plus seront situés dans les un ou plusieurs emplacements nécessitant un accès à distance au même moment sur la base du moment estimé.

5. Procédé de sortie d'informations mis en œuvre par ordinateur selon l'une des revendications 1 à 4,
dans lequel au moins l'un des objets mobiles a une vitesse de déplacement modifiable, ou a un itinéraire de déplacement modifiable, ou peut être arrêté, ou a une heure de départ modifiable, ou est en mesure de reculer.

6. Dispositif de sortie d'informations comprenant :
un dispositif d'obtention d'informations de déplacement qui obtient des informations de déplacement relatives au déplacement d'un objet mobile qui est en mesure de se déplacer de manière autonome et d'être soumis à au moins une parmi une opération à distance ou une surveillance à distance ;
un dispositif d'obtention d'informations d'emplacement qui obtient des informations d'emplacement relatives à un emplacement nécessitant un accès à distance où au moins une parmi l'opération à distance ou la surveillance à distance est requise ;
un dispositif de détermination qui détermine si deux objets mobiles ou plus seront situés dans un ou plusieurs emplacements nécessitant un accès à distance au même moment sur la base des informations de déplacement et des informations d'emplacement, les deux objets mobiles ou plus étant chacun un objet mobile, les un ou plusieurs emplacements nécessitant un accès à distance étant chacun un emplacement nécessitant un accès à distance ;
un générateur qui génère des informations de commande pour commander au moins un objet mobile des deux objets mobiles ou plus pour empêcher les deux objets mobiles ou plus de se trouver dans les un ou plusieurs emplacements nécessitant un accès à distance au même moment lorsqu'il est déterminé que les deux objets mobiles ou plus se trouvent dans les un ou plusieurs emplacements nécessitant un accès à distance au même moment ;
un dispositif de sortie qui délivre les informations de commande, dans lequel les informations de commande comportent au moins des informations parmi des informations pour modifier une vitesse de déplacement de l'objet mobile, des informations pour modifier un itinéraire de déplacement de l'objet mobile, des informations pour arrêter l'objet mobile, des informations pour modifier une heure de départ de l'objet mobile, ou des informations pour amener l'objet mobile à reculer,
un dispositif de commande pour commander un ou plusieurs de la pluralité d'objets mobiles (1) pour empêcher deux objets mobiles ou plus de se trouver dans les un ou plusieurs emplacements nécessitant un accès à distance au même moment,
dans lequel les deux objets mobiles ou plus comprennent plus qu'un nombre prédéterminé d'objets mobiles, et
le nombre prédéterminé est un nombre total de travailleurs qui effectuent au moins une parmi l'opération à distance ou la surveillance à distance.

7. Programme comprenant des instructions qui, lorsqu'elles sont exécutées par un ordinateur, amènent l'ordinateur à exécuter le procédé de sortie d'informations selon l'une des revendications 1 à 5.
